# EUROPEAN PATENT APPLICATION

(11) **EP 4 495 075 A1**
(43) Date of publication of application: **22.01.2025**
(21) Application number: 23187093.2
(22) Date of filing: 21.07.2023
(51) Int. Cl.: C03B 25/08, C03B 27/04, C03B 27/044, C21D 1/25, C21D 9/46

(54) **PLATE HEAT TREATMENT DEVICE AND HIGH-PRESSURE HARDENING REACTION MODULE**

(71) Applicant: Tung Chang Machinery and Engineering Co., Ltd., Taoyuan City (TW)
(72) Inventor: TU, LI-JEN, Taoyuan City (TW)
(74) Representative: Lang, Christian

(57) **Abstract**

A high-pressure hardening reaction module has a wind pressure adjustment device and multiple first heat treatment units. The wind pressure adjustment device has a first air source and a wind speed adjustment chamber. Multiple pairs of the first heat treatment units are communicative to the wind speed adjustment chamber, each pair of the first heat treatment units has a first upper air outlet slot and a first lower air outlet slot. Each pair of the first heat treatment units has a first upper heat treatment unit and a first lower heat treatment unit, both of which has a gap therebetween. A plate is conveyed to pass through the gaps of each pair of the first heat treatment units. By changing the volume of the wind speed adjustment chamber, a wind pressure which the airflow impacts on the plate is changed.

## Description

### TECHNICAL FIELD

The present disclosure relates to a technical field of a plate heat treatment device, and particularly to, a plate heat treatment device and a high-pressure hardening reaction module, both of which can change a volume of a chamber to change a flow speed of airflow, such that a wind pressure which the airflow impacts on the plate can be adjusted.

### RELATED ART

Glass materials are widely used in daily life, for example, applied to building materials to serve as interior decoration glass or window glass, or applied to electronic devices to serve as panels of displays or protective glass of mobile phones.

After the glass is made, a series of heat treatment processes must be performed to adjust the mechanical properties of the glass. For example, the annealing process is to slowly heat the glass to above the annealing temperature for a period, and then to gradually cool the glass to make the glass have a specific shape. Therefore, the stress of the glass can be eliminated to prevent the glass from breaking easily when it is impacted. Further, the tempering process is to first heat the glass to 600 degrees Celsius, and then use high-pressure air to impact on the glass surface and rapidly cool the glass to 300 degrees Celsius for quenching, such that compressive stress is generated on the glass surface to increase the hardness of the glass surface and to strengthen the glass surface. Finally, the tempering process is to gradually cool the glass cool to room temperature.

Current quenching is to produce airflow by using an airflow generation source, then to make the airflow enter a wind box, and next to make the airflow enter heat treatment units from the wind box. When the flow speed of the air is needed to be changed to adjust the wind pressure, the flow of the airflow generated by the airflow source must be changed, that is, Q = Av, wherein Q is the flow of the airflow, A is the cross-sectional area of the wind box, and v is the flow speed of the airflow. When the cross-sectional area A of the wind box was fixed, to change the flow speed v, it is necessary to change the flow Q of the airflow. However, to change the flow of the airflow, it requires to increase the driving force of the airflow source, such as changing the speed of the fan, which will increase power consumption.

### SUMMARY

One objective of the present disclosure is to provide a plate heat treatment device and a high-pressure hardening reaction module, both of which solve the problem that the driving force of the airflow source needs to be changed when changing the wind pressure during the tempering process in the prior art, wherein the problem in the prior art leads to an increase in energy consumption.

The present disclosure provides a high-pressure hardening reaction module, and the high-pressure hardening reaction module comprises a wind pressure adjustment device and multiple first heat treatment units. The wind pressure adjustment device comprises a first air source and a wind speed adjustment chamber. The first air source generates a first airflow with a predetermined flow. A volume of the wind speed adjustment chamber is variable, multiple pairs of the first heat treatment units are respectively communicative to the first air outlets of the wind speed adjustment chamber, each pair of the first heat treatment units comprises a first upper air outlet slot and a first lower air outlet slot, and the first upper air outlet slot and a first lower air outlet slot are opposite to each other and have the same configuration. Each pair of the first heat treatment units comprises a first upper heat treatment unit and a first lower heat treatment unit, both of which has a gap therebetween. The multiple pairs of the first heat treatment units are arranged in a row, and a plate is conveyed to pass through the gap between the first upper heat treatment unit and the first lower heat treatment unit of each pair of the first heat treatment units. By changing the volume of the wind speed adjustment chamber, a flow speed of the first airflow exiting outside from the first air outlets can be changed, such that the wind pressure which the first airflow impacts on the plate is also changed.

In one embodiment, the wind speed adjustment chamber comprises a chamber and multiple gates, the first air inlet and the first air outlets are disposed on the chamber, the gates are arranged in parallel, and line up in a row from the first air inlet to far, and each of the gates is configured to be able to move in the chamber to close a cross section, such that the volume of the chamber into which first airflow flows is variable.

In one embodiment, the wind speed adjustment chamber further comprises multiple guide frame units, the guide frame units are disposed in the chamber and corresponding to the gates, each of the guide frame units comprises a pair of guide frames, the paired guide frames have a spacing therebetween and are disposed in parallel, one of the gates is configured to move between the paired guide frames, and each of the guide frames has a hollow part.

In one embodiment, the wind speed adjustment chamber further comprises multiple airtight parts, the airtight parts are correspondingly disposed on the guide frames, and when each of the gates is move between the paired guide frames, the gate contacts the airtight parts disposed on the paired guide frames.

In one embodiment, the wind speed adjustment chamber further comprises multiple housings, the chamber has multiple entrances, the housings are disposed outside the chamber and corresponding to the entrances, and the gates are respectively disposed in the housings, and enter the chamber respectively through the entrances.

The present disclosure provides a plate heat treatment device comprising the above high-pressure hardening reaction module and a low-pressure cooling module. The low-pressure cooling module comprises a second air source, an airflow chamber and multiple pairs of second heat treatment units. The second air source generates a second airflow with a predetermined flow second air source. The airflow chamber is connected to the wind speed adjustment chamber, and have a volume being variable. A volume variation of the airflow chamber is inversely proportional to a volume variation of the wind speed adjustment chamber. The airflow chamber comprises a second air inlet and multiple second air outlets, and the second air source is communicative to the second air inlet. The multiple pairs of second heat treatment units are respectively communicative to the second air outlets of the airflow chamber. Each pair of the second heat treatment units comprises an upper air outlet slot and a lower air outlet slot, both of which are arranged opposite to each other and have a same configuration, each pair of the second heat treatment units has a second upper heat treatment unit and a second lower heat treatment unit, both of which have a gap therebetween, the multiple pairs of the second heat treatment units are arranged in a row, and the plate is conveyed to pass through the gap between the second upper heat treatment unit and the second lower heat treatment unit of each pair of the second heat treatment units.

To sum up, the plate heat treatment device and the high-pressure hardening reaction module of the present disclosure can change the volume of the wind speed adjustment chamber to adjust the wind pressures of the first heat treatment units. Specifically, when changing the cross-sectional area of the wind speed adjustment chamber, the wind speeds of the first heat treatment units are changed, and the wind pressures of the first heat treatment units can be adjusted. Therefore, in case of fixing the flow of the airflow generated by the first air source, when changing the cross-sectional area of the wind speed adjustment chamber to adjust the wind pressure, the output (the flow of the airflow) of the first air source does not change, and it saves energy.

### BRIEF DESCRIPTIONS OF DRAWINGS

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings. All drawings of the present disclosure are listed and briefly described as follows.
FIG. 1 is a schematic diagram of the plate heat treatment device according to one embodiment of the present disclosure.
FIG. 2 is a schematic enlarged diagram of the high-pressure hardening reaction module and the low-pressure cooling module of the plate heat treatment device according to one embodiment of the present disclosure.
FIG. 3 is a schematic side view of the first heat treatment unit or the second heat treatment unit of the plate heat treatment device in FIG. 1.
FIG. 4 is schematic three-dimensional view of the first heat treatment unit or the second heat treatment unit of the plate heat treatment device in FIG. 1.
FIG. 5 is a schematic diagram which the plate passes through the first heat treatment unit and/or the second heat treatment unit.
FIG. 6 is a schematic diagram which the high-pressure hardening reaction module closes a gate at a first position to change the cross-sectional area of the wind speed adjustment chamber of the high-pressure hardening reaction module.
FIG. 7 is a schematic diagram which the high-pressure hardening reaction module closes a gate at a second position to change the cross-sectional area of the wind speed adjustment chamber of the high-pressure hardening reaction module.

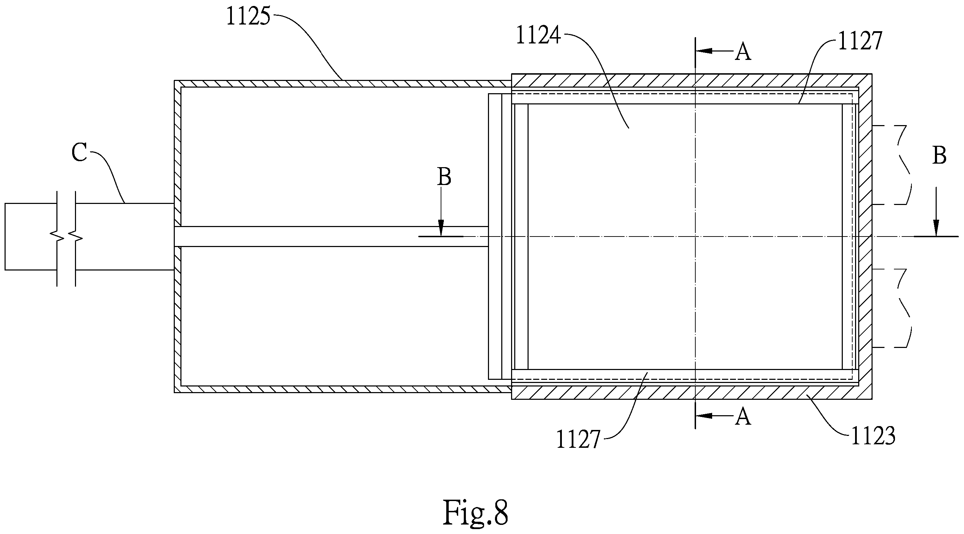

FIG. 8 is a schematic diagram which the gate of the high-pressure hardening reaction module moves to the chamber to change the cross-sectional area of the wind speed adjustment chamber of the high-pressure hardening reaction module.
FIG. 9 is a schematic diagram which the gate of the high-pressure hardening reaction module moves away from the chamber to change the cross-sectional area of the wind speed adjustment chamber of the high-pressure hardening reaction module.
FIG. 10 is a sectional view along a line A-A of FIG. 8.
FIG. 11 is a sectional view along a line B-B of FIG. 8.

### DETAILED DESCRIPTIONS OF EXEMPLARY EMBODIMENT

While embodiments are described herein by way of example for multiple embodiments and illustrative drawings, those skilled in the art will recognize that embodiments are not limited to the embodiments or drawings described. It is noted that, drawings and detailed descriptions thereto are not intended to limit embodiments to the specific implementations disclosed, but on the contrary, the intention is to cover all modifications, equivalents and alternatives falling within the spirit and scope as defined by the appended claims.

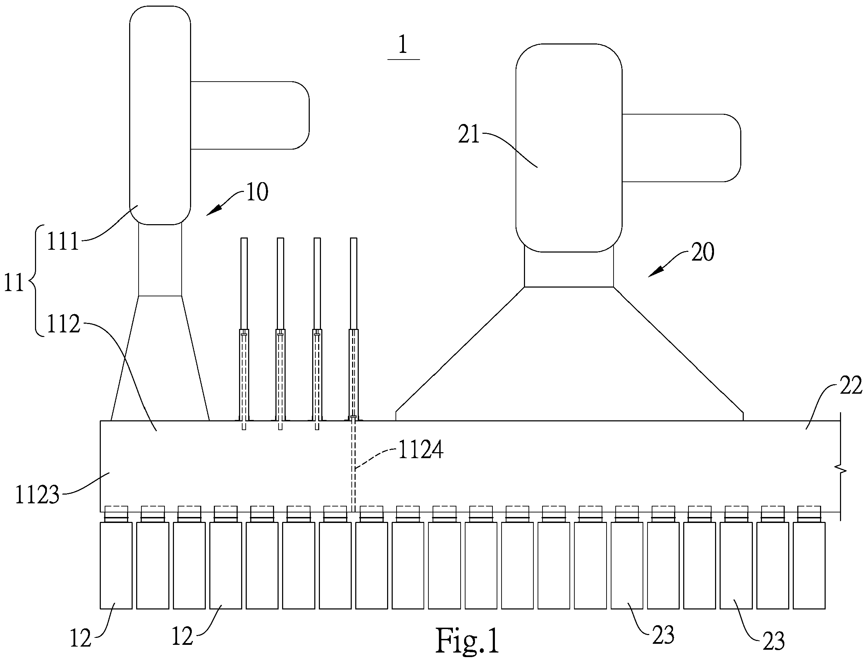

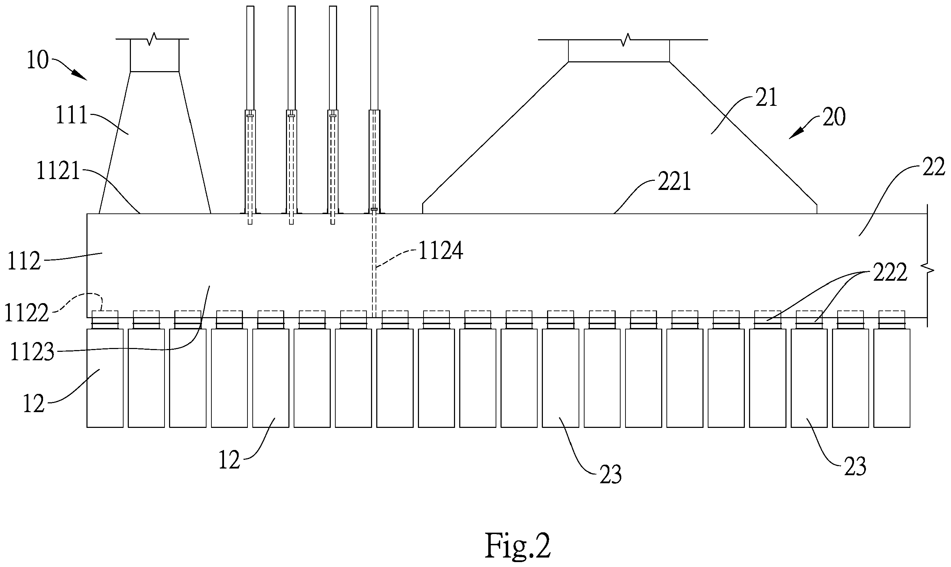

Refer to FIG. 1 and FIG. 2, and both of FIG. 1 and FIG. 2 relate to an embodiment of a plate heat treatment device provided by the present disclosure. In the embodiment, the plate heat treatment device 1 comprises a high-pressure hardening reaction module 10 and a low-pressure cooling module 20. After the plate is heated to about 600 degrees Celsius, the plate passes through high-pressure hardening reaction module 10 and low-pressure cooling module 20 in sequence. The plate in the high-pressure hardening reaction module 10 is quickly cooled down to 300 degrees Celsius for quenching by using the high-pressure airflow, stress of a surface of the plate is thus enhanced to increase hardness of the plate, such that the strengthening effect on the plate is achieved. The plate after the quenching process is cooled down by using a low-pressure airflow in the low-pressure cooling module 20.

In the embodiment, the high-pressure hardening reaction module 10 comprises a wind pressure adjustment device 11 and multiple pairs of first heat treatment units 12. The multiple pairs of the first heat treatment units 12 are disposed on the wind pressure adjustment device 11. The wind pressure adjustment device 11 comprises a first air source 111 and a wind speed adjustment chamber 112. The first air source 111 is configured to generate a first airflow with a predetermined flow. The wind speed adjustment chamber 112 has a volume being variable and comprises a first air inlet 1121 and multiple first air outlets 1122. The first air source 111 is communicative to the first air inlet 1121. The first air source 111 can be a blower, and the first airflow is generated by a fan or an impeller. The first airflow has a predetermined flow, and the first airflow enters the wind speed adjustment chamber 112 from the first air inlet 1121.

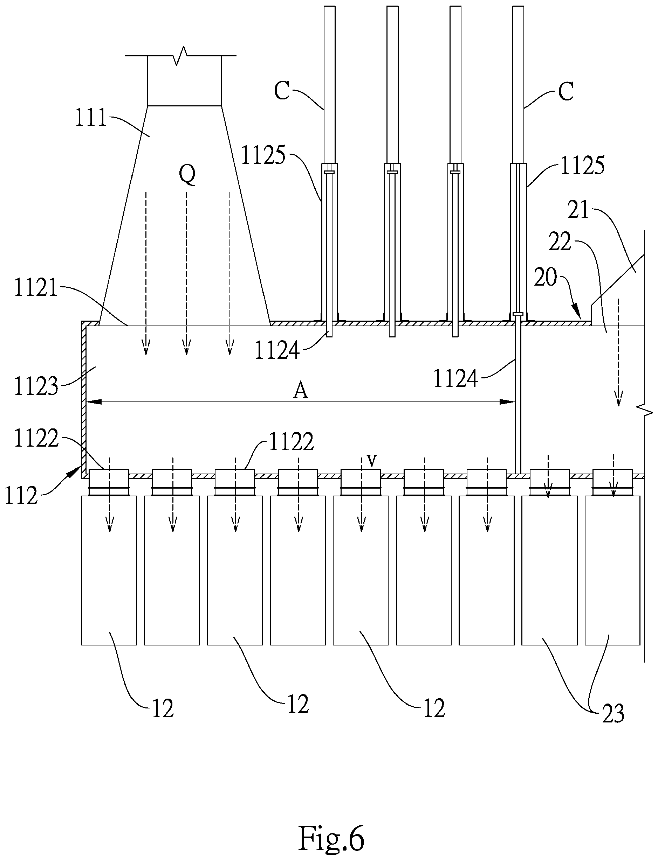

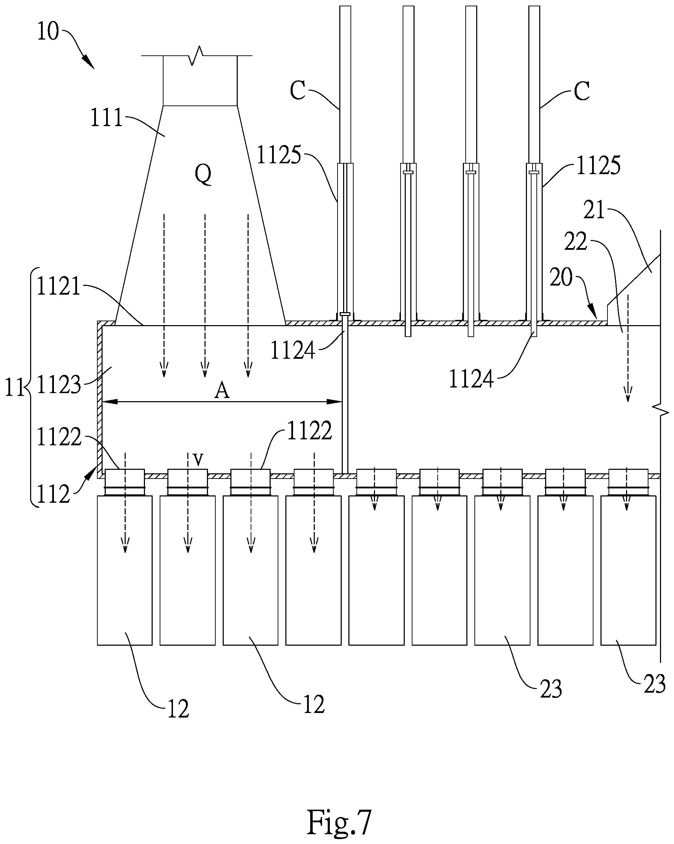

Refer to FIG. 6 and FIG. 7, and the wind speed adjustment chamber 112 comprises a chamber 1123 and multiple gates 1124. The first air inlet 1121 and the first air outlet 1122 are disposed on the chamber 1123. The gates 1124 are arranged in parallel, and line up in a row from the first air inlet 1121 to far. Each of the gates 1124 can move into the chamber 1123 to close a cross section of the chamber 1123, such that the volume of the chamber 112 into which the first airflow flows can be variable. Thus, the cross-sectional area of the first air outlet 1122 corresponding to first airflow is variable. Since Q =Av, i.e., the flow Q is equal to the product of the cross-sectional area A and the flow speed v, by making the gates 1124 at various positions move into the chamber 1123, the cross-sectional area A of the first air outlet 1122 corresponding to first airflow is variable. In the case of the same flow Q of the first airflow, the cross-sectional area A is inversely proportional to the flow speed v of the first airflow. The cross-sectional area A in FIG. 6 is larger than the cross-sectional area A in FIG. 7, and thus the flow speed v of the first airflow in FIG. 6 is less than the flow speed v of the first airflow in FIG. 7, such that the wind pressure which the first airflow impacts on the plate P can be adjusted.

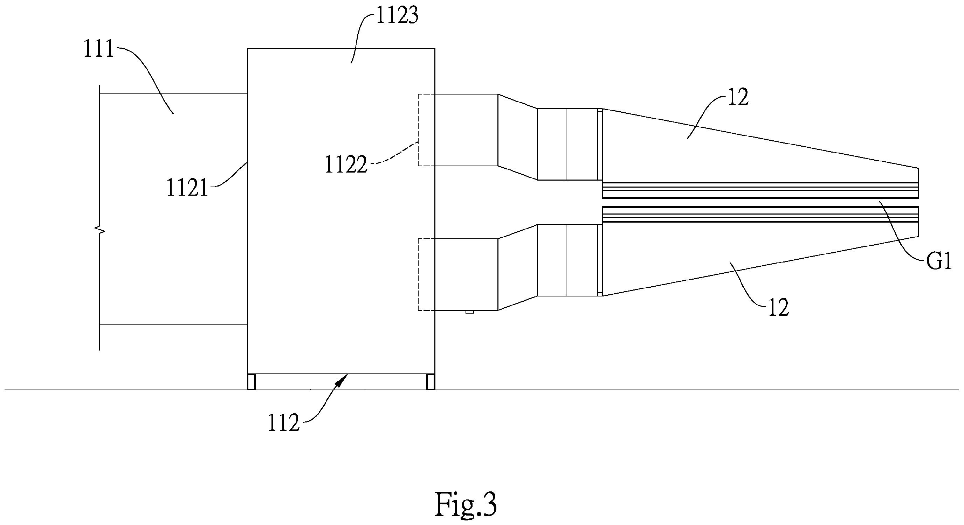

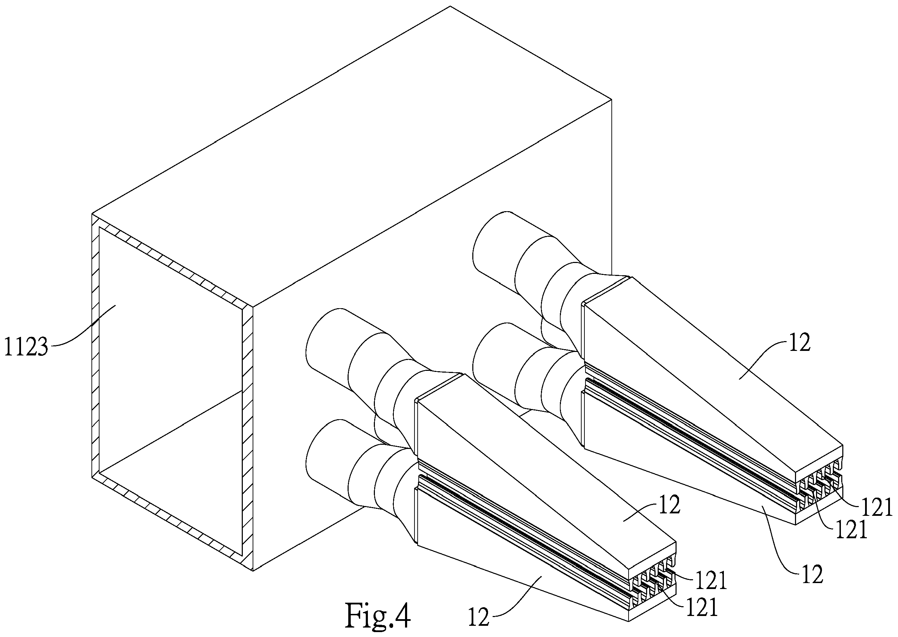

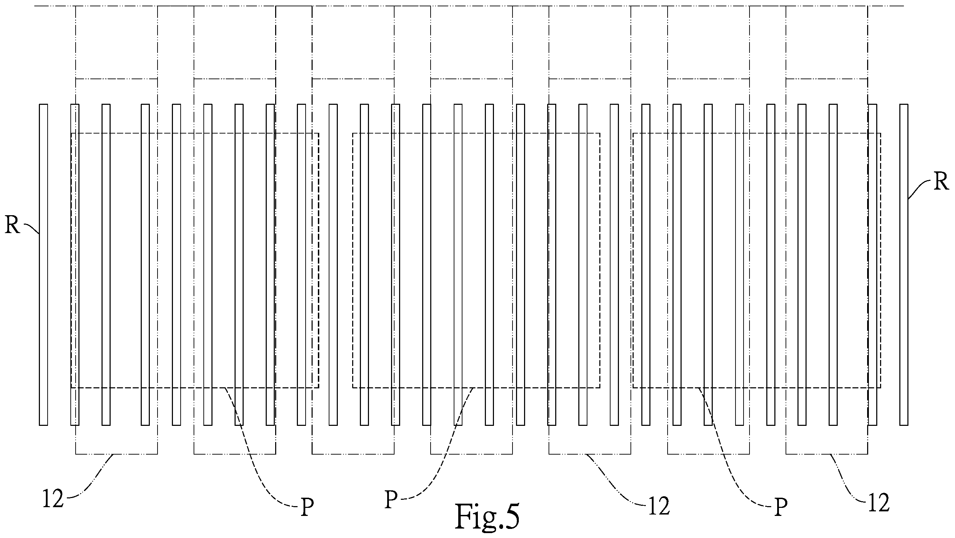

The first airflow enters the multiple pairs of the first heat treatment units 12 through the first air outlets 1122. As shown in FIG. 3 to FIG. 5, the multiple pairs of the first heat treatment units 12 are respectively communicative to the first air outlets 1122 of the wind speed adjustment chamber 112. Each pair of the first heat treatment units 12 comprises an upper air outlet slot 121 and a lower air outlet slot 121, both of which are arranged opposite to each other and have a same configuration. Specifically, each pair of the first heat treatment units 12 comprises a first upper heat treatment unit 12 and a first lower heat treatment unit 12. The first upper heat treatment unit 12 and the first lower heat treatment unit 12 have a gap G1 therebetween, and respectively has the upper air outlet slot 121 and the lower air outlet slot 121. The multiple pairs of the first heat treatment units 12 are arranged in a row. A plate P is conveyed to pass through the gap G1 between the first upper heat treatment unit 12 and the first lower heat treatment unit 12 of each pair of the first heat treatment units 12, and the plate P is supported and driven by the rollers R to move. The first airflow enters the wind speed adjustment chamber 112 from the first air inlet 1121, and by changing the volume of the wind speed adjustment chamber 112, a flow speed of the first airflow exiting outside from the first air outlets 1122 can be changed, thereby adjusting the wind pressure which the first airflow impacts on the plate P.

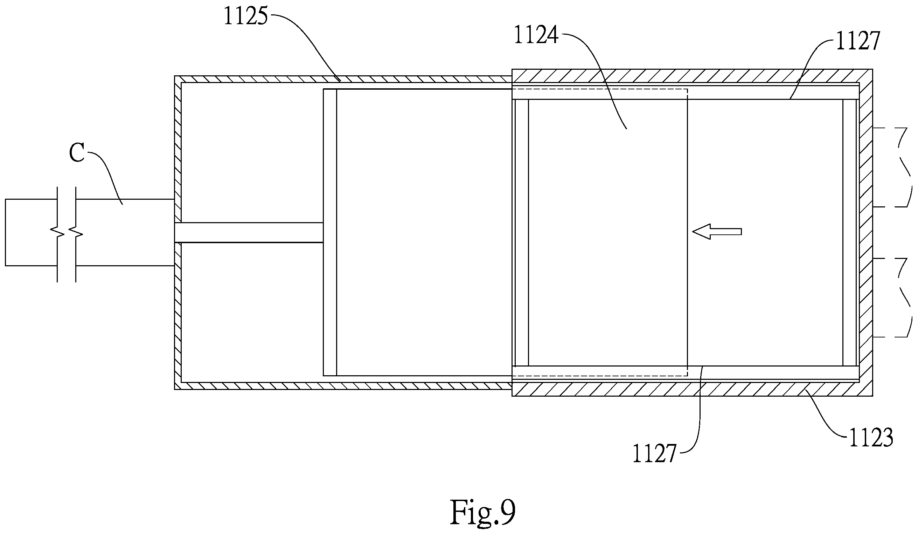

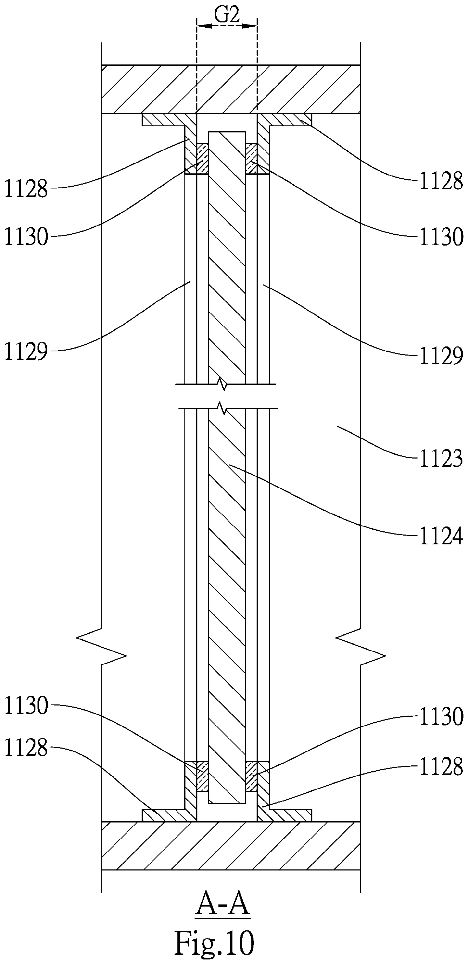

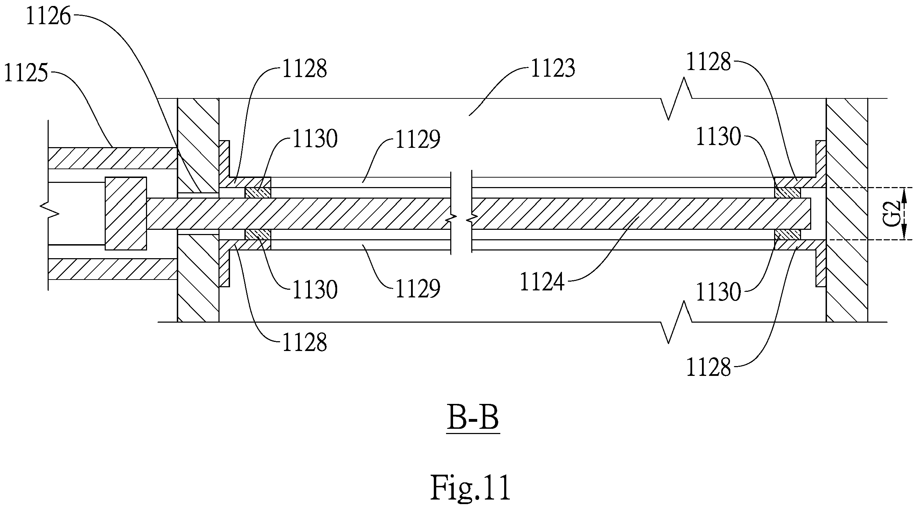

Refer to FIG. 9 to FIG. 11, and the gates 1124 in the embodiment are driven by multiple pneumatic cylinders C to move. The wind speed adjustment chamber 112 further comprises multiple housings 1125, and the housings 1125 are connected to the outer surface of the chamber 1123. The chamber 1123 is disposed with multiple entrances 1126, the gates 1124 can move into the chamber 1123 from the entrance 1126. When the gate 1124 moves away from the chamber 1123, the gates 1124 move to the housings 1125 and received in the housings 1125.

The wind speed adjustment chamber 112 comprises multiple guide frame units 1127, each of the guide frame unit 1127 is formed by a pair of guide frames 1128, and the pair of guide frames 1128 comprises a left guide frame 1128 and a right guide frame 1128. The paired guide frames 1128 (i.e., the left guide frame 1128 and the right guide frame 1128) have a spacing G2, and when the gate 1124 moves into the chamber 1123, the gate 1124 passes through the spacing G2 between the paired guide frames 1128. Each of the guide frames 1128 has a hollow part 1129, and the hollow part 1129 makes interior of the chamber keep communicative when the gate 1124 does not move into the chamber 1123.

The wind speed adjustment chamber 112 comprise multiple airtight parts 1130, and the airtight parts 1130 are disposed in the spacing G2 between the paired guide frames 1128. Each of the airtight parts 1130 corresponding to the paired guide frames 1128 are disposed opposite to each other, and when the gate 1124 passes through the spacing G2 between the paired guide frames 1128, the gate 1124 contacts the airtight parts 1130, such that the air in the chamber 1123 will not leak from the entrance 1126.

The low-pressure cooling module 20 comprises a second air source 21, an airflow chamber 22 and multiple pairs of second heat treatment units 23. The second air source 21 generates a second airflow with a predetermined flow. The airflow chamber 22 is connected to the wind speed adjustment chamber 112, and has a volume being variable. A volume variation of the airflow chamber 22 is inversely proportional to a volume variation of the wind speed adjustment chamber 112. As shown in FIG. 2, when one of the gates 1124 at various positions moves into the chamber 1123, the volume of wind speed adjustment chamber 112 will be reduced, and the volume of the airflow chamber 22 will be increased.

The airflow chamber 22 further comprises a second air inlet 221 and multiple second air outlets 222, and the second air source 21 is communicative to the second air inlet 221. In the embodiment, the second air source 21 is a blower. The multiple pairs of the second heat treatment unit 23 are respectively communicative to the second air outlets 222 of the airflow chamber 22. Each pair of the second heat treatment units 23 comprises an upper air outlet slot and a lower air outlet slot, both of which are arranged opposite to each other and have a same configuration. Specifically, each pair of the second heat treatment units 23 has a second upper heat treatment unit 23 and a second lower heat treatment unit 23, and the second upper heat treatment unit 23 and the second lower heat treatment unit 23 respectively have the upper air outlet slot and the lower air outlet slot. The second upper heat treatment unit 23 and the second lower heat treatment unit 23 further have a gap therebetween. The multiple pairs of the second heat treatment units 23 are arranged in a row, and the plate P is conveyed to first pass through the gap G1 between the first upper heat treatment unit 12 and the first lower heat treatment unit 12 the of each pair of the first heat treatment units 12, and then through the gap between the second upper heat treatment unit 23 and the second lower heat treatment unit 23 of each pair of the second heat treatment units 23.

Accordingly, the plate heat treatment device and the high-pressure hardening reaction module of the present disclosure can change the volume of the wind speed adjustment chamber to adjust the wind pressures of the first heat treatment units. Specifically, when changing the cross-sectional area of the wind speed adjustment chamber, the wind speeds of the first heat treatment units are changed, and the wind pressures of the first heat treatment units can be adjusted. Therefore, in case of fixing the flow of the airflow generated by the first air source, when changing the cross-sectional area of the wind speed adjustment chamber to adjust the wind pressure, the output (the flow of the airflow) of the first air source does not change, and it saves energy. Although the embodiment is described with a glass plate as an example, the present disclosure is not limited to the glass plate, and the heat treatment of steel or other metal plates is also applicable.

Various modifications and changes may be made as would be obvious to a person skilled in the art having the benefit of this disclosure. It is intended to embrace all such modifications and changes and, accordingly, the above descriptions to be regarded in an illustrative rather than a restrictive sense.

## Claims

1. A high-pressure hardening reaction module, configured to enhance hardness of a plate, comprising:
a wind pressure adjustment device (11), comprising:
a first air source (111), configured to generate a first airflow with a predetermined flow; and
a wind speed adjustment chamber (112), having a volume being variable, comprising a first air inlet (1121) and multiple first air outlets (1122), wherein the first air source (111) is communicative to the first air inlet (1121); and
multiple pairs of first heat treatment units (12), being respectively communicative to the first air outlets (1122) of the wind speed adjustment chamber (112), wherein each pair of the first heat treatment units (12) comprises an upper air outlet slot (121) and a lower air outlet slot (121), both of which are arranged opposite to each other and have a same configuration, each pair of the first heat treatment units (12) has a first upper heat treatment unit (12) and a first lower heat treatment unit (12), both of which have a gap (G1) therebetween, and the multiple pairs of the first heat treatment units (12) are arranged in a row;
wherein the first airflow enters the wind speed adjustment chamber (112) from the first air inlet (1121), and by changing the volume of the wind speed adjustment chamber (112), a flow speed of the first airflow exiting outside from the first air outlets can be changed.

2. The high-pressure hardening reaction module of claim 1, wherein the wind speed adjustment chamber (112) comprises a chamber (1123) and multiple gates (1124), the first air inlet (1121) and the first air outlets (1122) are disposed on the chamber (1123), the gates (1124) are arranged in parallel, and line up in a row from the first air inlet (1121) to far, and each of the gates (1124) is configured to be able to move in the chamber (1123) to close a cross section, such that the volume of the chamber (1123) into which first airflow flows is variable.

3. The high-pressure hardening reaction module of claim 2, wherein the wind speed adjustment chamber (112) further comprises multiple guide frame units (1127), the guide frame units (1127) are disposed in the chamber (1123) and corresponding to the gates (1124), each of the guide frame units (1127) comprises a pair of guide frames (1128), the paired guide frames (1128) have a spacing (G2) therebetween and are disposed in parallel, one of the gates (1124) is configured to move between the paired guide frames (1128), and each of the guide frames (1128) has a hollow part (1129).

4. The high-pressure hardening reaction module of claim 3, wherein the wind speed adjustment chamber (112) further comprises multiple airtight parts (1130), the airtight parts (1130) are correspondingly disposed on the guide frames (1128), and when each of the gates (1124) is move between the paired guide frames (1128), the gate (1124) contacts the airtight parts (1130) disposed on the paired guide frames (1128).

5. The high-pressure hardening reaction module of claim 3, wherein the wind speed adjustment chamber (112) further comprises multiple housings (1125), the chamber (1123) has multiple entrances (1126), the housings (1125) are disposed outside the chamber (1123) and corresponding to the entrances (1126), and the gates (1124) are respectively disposed in the housings (1125), and enter the chamber (1123) respectively through the entrances (1126).

6. A plate heat treatment device, configured to perform heat treatment on a plate (P), comprising:
a high-pressure hardening reaction module (10), comprising:
a wind pressure adjustment device (11), comprising:
a first air source (111), configured to generate a first airflow with a predetermined flow; and
a wind speed adjustment chamber (112), having a volume being variable, comprising a first air inlet (1121) and multiple first air outlets (1122), wherein the first air source (111) is communicative to the first air inlet (1121);
multiple pairs of first heat treatment units (12), being respectively communicative to the first air outlets (1122) of the wind speed adjustment chamber (112), wherein each pair of the first heat treatment units (12) comprises an upper air outlet slot (121) and a lower air outlet slot (121), both of which are arranged opposite to each other and have a same configuration, each pair of the first heat treatment units (12) has a first upper heat treatment unit (12) and a first lower heat treatment unit (12), both of which have a gap (G1) therebetween, the multiple pairs of the first heat treatment units (12) are arranged in a row, and a plate (P) is conveyed to pass through the gap (G1) between the first upper heat treatment unit (12) and the first lower heat treatment unit (12) of each pair of the first heat treatment units (12);
wherein the first airflow enters the wind speed adjustment chamber (112) from the first air inlet (1121), and by changing the volume of the wind speed adjustment chamber (112), a flow speed of the first airflow exiting outside from the first air outlets (1122) can be
changed; and
a low-pressure cooling module (20), comprising:
a second air source (21), configured to generate a second airflow with a predetermined flow;
an airflow chamber (22), connected to the wind speed adjustment chamber (112), having a volume being variable, wherein a volume variation of the airflow chamber (22) is inversely proportional to a volume variation of the wind speed adjustment chamber (112), the airflow chamber (22) comprises a second air inlet (221) and multiple second air outlets (222), and the second air source (21) is communicative to the second air inlet (221);
multiple pairs of second heat treatment units (23), being respectively communicative to the second air outlets (222) of the airflow chamber (22), wherein each pair of the second heat treatment units (23) comprises an upper air outlet slot and a lower air outlet slot, both of which are arranged opposite to each other and have a same configuration, each pair of the second heat treatment units (23) has a second upper heat treatment unit (23) and a second lower heat treatment unit (23), both of which have a gap therebetween, the multiple pairs of the second heat treatment units (23) are arranged in a row, and the plate (P) is conveyed to pass through the gap between the second upper heat treatment unit (23) and the second lower heat treatment unit (23) of each pair of the second heat treatment units (23).

7. The plate heat treatment device of claim 6, wherein the wind speed adjustment chamber (112) comprises a chamber (1123) and multiple gates (1124), the first air inlet (1121) and the first air outlets (1122) are disposed on the chamber (1123), the gates (1124) are arranged in parallel, and line up in a row from the first air inlet (1121) to far, and each of the gates (1124) is configured to be able to move in the chamber (1123) to close a cross section, such that the volume of the chamber (1123) into which first airflow flows is variable.

8. The plate heat treatment device of claim 7, wherein he wind speed adjustment chamber (112) further comprises multiple guide frame units (1127), the guide frame units (1127) are disposed in the chamber (1123) and corresponding to the gates (1124), each of the guide frame units (1127) comprises a pair of guide frames (1128), the paired guide frames (1128) have a spacing (G2) therebetween and are disposed in parallel, one of the gates (1124) is configured to move between the paired guide frames (1128), and each of the guide frames (1128) has a hollow part (1129).

9. The plate heat treatment device of claim 8, wherein the wind speed adjustment chamber (112) further comprises multiple airtight parts (1130), the airtight parts (1130) are correspondingly disposed on the guide frames (1128), and when each of the gates (1124) is move between the paired guide frames (1128), the gate (1124) contacts the airtight parts (1130) disposed on the paired guide frames (1128).

10. The plate heat treatment device of claim 8, wherein the wind speed adjustment chamber (112) further comprises multiple housings (1125), the chamber (1123) has multiple entrances (1126), the housings (1125) are disposed outside the chamber (1123) and corresponding to the entrances (1126), and the gates (1124) are respectively disposed in the housings (1125), and enter the chamber(1123) respectively through the entrances (1126).
